# EUROPEAN PATENT SPECIFICATION

(11) **EP 0 862 710 B1**
(45) Date of publication and mention of the grant of the patent: **23.08.2000**
(21) Application number: 96940333.6
(22) Date of filing: 15.10.1996
(51) Int. Cl.: F16L 37/28, F16L 37/30, F16L 37/34

(54) **LOW SPILL FEMALE COUPLING**
WEIBLICHES KUPPLUNGSELEMENT MIT GERINGER LECKRATE
COUPLEUR FEMELLE A FAIBLES PERTES

(30) Priority: 20.11.1995 US 559623
(43) Date of publication of application: 09.09.1998
(73) Proprietor: AEROQUIP CORPORATION, Maumee, OH 43537 (US)
(72) Inventor: WELLS, Michael, P., Holland, OH 43528 (US)
(74) Representative: Baverstock, Michael George Douglas
(86) International application number: US9617896
(87) International publication number: WO9719289

(56) References cited:
- DE-A- 4 114 465
- US-A- 2 966 371
- US-A- 3 417 781
- US-A- 4 892 117

## Description

### BACKGROUND OF THE INVENTION

For many applications it is desirable to utilize quick disconnect couplings consisting of a male coupling member attached to one end of a fluid conduit line and a female coupling member attached to an end of an opposing fluid conduit line such that the opposing male and female couplings may be readily joined together with a simple axial movement of the male coupling into the female coupling. Typically the female coupling member has an axially slideably release collar which controls radial movement of detent balls from a radially outward position when the collar is retracted to a radially inward position when the collar is urged to its forward position. When the detent balls are in their radially outward position, the male member is free to be readily inserted into or removed from the female coupling and, when the detent balls are in their radially inward position, they will engage and retain a male member positioned in the female coupling. Examples of a prior art fluid couplings utilizing detent balls in cooperation with an axially slideable collar to retain a male coupling member affixed to a female coupling member may be had by reference to U.S. Patent Nos. 4,892,117 and 5,179,976, assigned to the assignee of the present application and incorporated herein by reference. Reference is also made to International Standard ISO 7241-1 entitled "Hydraulic fluid power-quick acting couplings Q" issued by the International Organization for Standardization, First Edition 1987-04-01, Part 1 which sets forth dimensions and requirements for such quick-acting couplings.

For many industrial fluid flow applications, it is desirable that there be a minimal amount of fluid loss and a minimal amount of air inclusion occurring when the male coupling is joined to the female coupling or when it is removed therefrom. One type of prior art coupling having the push-to-connect feature with detent balls and an axially moveable collar controlling the detent balls which provides minimal fluid loss when the male and female coupling members are connected and disconnected is one sold by the assignee of the present invention as its FD 49 series flush face hydraulic tools coupling. Details of this coupling maybe seen in Aeroquip Corporation Bulletin JB 27 and in U.S. Patent No. 4,614,348. Although the Aeroquip FD 49 coupling is a superior coupling and well suited for providing minimal fluid loss and minimal air inclusion upon connecting and disconnecting of the members, it requires that both the male coupling part and the female coupling part have a flat face. There are many couplings presently in commercial use which do not provide for minimal fluid loss and minimal air inclusion which are being used in applications for which it is now desired to have minimal fluid loss and minimal air inclusion. Among such a prior art types of couplings which are not presently suited for minimal fluid loss or minimal air inclusion are ones having a central nose extending beyond the body portion of the male coupling member such as that shown in the aforementioned International Standard ISO 7241-1 or as shown in the aforementioned Aeroquip Corporation Bulletin JB 27 as the male half of FD 45 series or FD 48 series couplings.

It will be appreciated that any conversion which requires converting both the female coupling members and male coupling members will involve substantial expense.

### SUMMARY OF THE INVENTION

Under the present invention there is provided a female coupling member which is designed to be utilized with male coupling members having non-flat faces of the type with a projecting nose and to thereby provide a male member and female member connected coupling with minimal fluid loss and minimal air inclusion.

Accordingly, it is an object of the present invention to provide a female coupling member suitable for use with existing male, projecting nose type coupling members to convert the interconnected male/female coupling combination from a fluid-loss, air inclusion type coupling to one having minimal fluid loss and minimal air inclusion.

The invention is defined by the technical features of claim 1.

The female member of the present invention includes a body portion in which is positioned an axially slideable sleeve and a central stem valve having an enlarged head with a contoured receiving end extending outwardly from the receiving end of the sleeve and sized to receive the nose of an associated male coupling member. The body has an inwardly facing annular seal. The body, the sleeve and the valve stem are so configured in relationship to the male coupling member as to prevent excessive amounts of air from becoming entrapped between the male coupling member and female coupling member and to (1) prevent excessive fluid loss as such members are joined together or are disconnected and (2) to prevent the flow of fluid prior to a seal being effected between such members.

### IN THE DRAWINGS

Fig. 1 is an elevational view in section showing the female coupling member of the present invention disconnected from a male coupling member of a type widely in commercial use.

Fig. 1A is a sectional view taken along line 1A-1A of Fig. 1.

Fig. 2 is a view similar to Fig. 1 is showing the male coupling member positioned partially in, but not yet fully connected to, the female coupling member and with both the male coupling member and the female coupling member in the closed position.

Fig. 3 is a view similar to Figs. 1 and 2 showing the male coupling member fully engaged to the female coupling member with each of such members and the resulting interconnected coupling being in the open position.

Fig. 4 is an elevational view in section showing a modified embodiment of female coupling member disconnected from a male coupling member.

Fig. 4A is a sectional view taken along line 4A-4A of Fig. 4.

Fig. 5 is a view of the modified embodiment of Fig. 4 with the members positioned as in Fig. 2.

Fig. 6 is a view of the embodiment of Fig. 4 with the members fully engaged as in Fig. 3.

Fig. 6A is a fragmentary sectional view showing another embodiment with the members fully engaged as in Fig. 6.

### DETAILED DESCRIPTION OF THE INVENTION

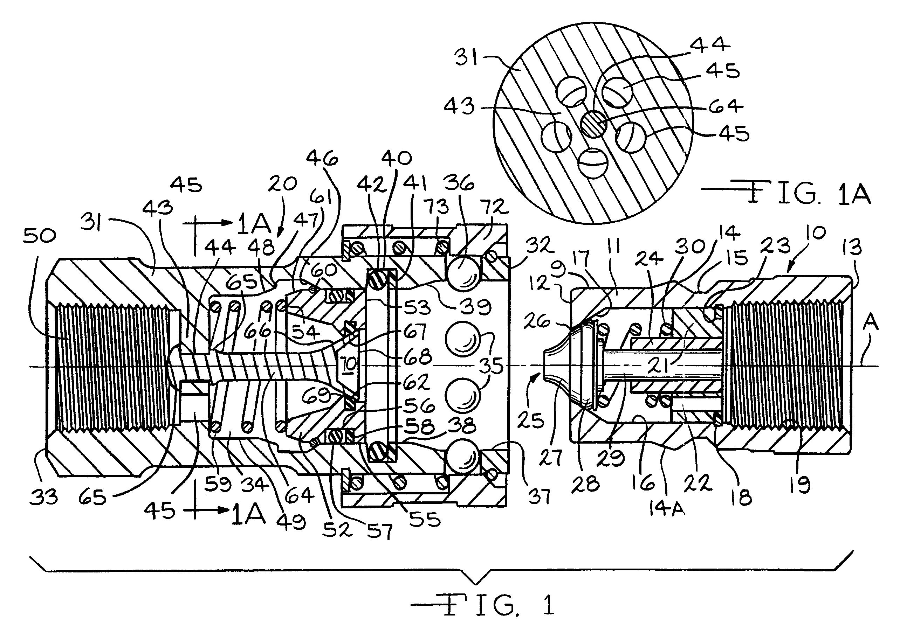

Referring now to Fig. 1 through 3 there is shown a male coupling member generally designated by the numeral 10 having a body portion 11 extending along an axis A from a insertion end 12 having a flat face to an external end 13. The exterior surface of the body portion is provided with a cylindrical wall surface 9 extending from the insertion end 12 to an outwardly tapering leading ramp 14A extending to an abutment 14. An outwardly facing annular groove 15 is positioned on the opposite side of the abutment 14. Internally, the body portion 11 has a central cylindrical wall portion 16 and an inwardly tapering wall portion 17 extending from the cylindrical wall portion 16 to the flat insertion end 12. Adjacent the cylindrical wall portion 16 is an inwardly facing groove 18. If desired, inwardly facing threads 19 for fastening to a fluid flow line may extend from the external end 13 to a position close to the inwardly facing groove 18. Other well known connector means may be utilized for fastening the male coupling member 10 to a fluid flow line.

Positioned in the body portion 11 is a spider 21 having a plurality of longitudinally extending passageways 22. A snap ring 23 is positioned in the inwardly facing groove 18 and abuts the spider 21 to prevent movement of the spider toward the external end 13. Positioned in the spider 21 is a guide sleeve 24 having a central passageway. A stem valve 25 has an enlarged head 26 with a protruding nose portion 27 which extends axially outwardly from the insertion end 12 and an axial stem 29 extending from the head 26 through the passageway of the guide sleeve 24. The enlarged head 26 is provided with an annuler seal 28 sized to sealingly engage the tapered wall portion 17. The axial stem 29 is slideable relative to the guide sleeve 24. A compression spring 30 encircles the guide sleeve 24 and axial stem 29 and has one end engaged to the spider 21 and the opposing end engaged to the enlarged head 26 to yieldingly urge the stem valve 25 to a position such that the annular seal 28 sealingly engages the tapered wall 17. The enlarged head 26 is tapered in the area between the nose portion 27 and the annular seal 28 at an angle relative to the axis A which is similar to the angle of the tapering wall portion 17 and, by virtue of its size, may engage such tapering wall portion 17 following sealing engagement of the annular seal 28 therewith to prevent the enlarged head portion adjacent the annular seal from being pushed out of body portion 11 by the compression spring 30.

The female coupling member 20 includes a body 31 extending along an axis A from a receiving end 32 to an opposing end 33. The body 31 has an axial passageway 34 extending from the receiving end 32 to the opposing end 33. A plurality of apertures 35, preferably circular in cross-section, are positioned circumferentially around the body in a position slightly spaced from the receiving end 32. The apertures 35 are sized to receive therein a plurality of detent balls 36. The body 31 includes a first inwardly facing cylindrical wall portion 37 extending from the receiving end 32 having a diametrical size sufficient to receive the abutment 14 of the male coupling member 10 and a second inwardly facing cylindrical wall portion 38 of a smaller size to receive the cylindrical wall surface 9 between the insertion end 12 and the leading ramp 14A of the abutment 14. As is well known in the art, the apertures 35 are smaller at the interior surface defined by the first inwardly facing wall portion 37 than the diameter of the balls 36 and larger than the diameter of the balls 36 at the exterior surface.

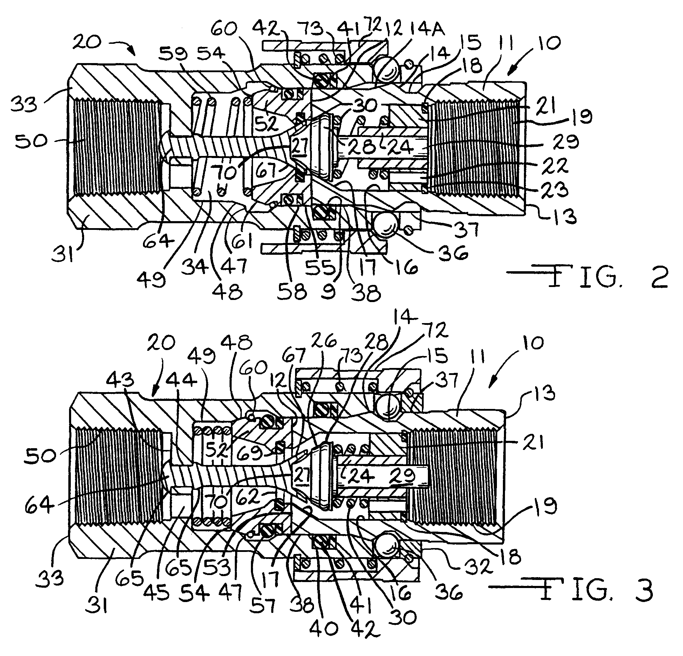

An inwardly tapering wall portion 39 joins the first inwardly facing cylindrical wall portion 37 and a second inwardly facing cylindrical wall portion 38 of smaller diameter. The angle of taper of the tapering wall portion 39 is preferably substantially the same as the angle of taper of the ramp 14A of the male coupling member 10 so that when the male coupling member 10 is fully engaged to the female coupling member 20 (see Fig. 3), the ramp 14A will be in contact with the tapering wall portion 39 throughout.

The second inwardly facing cylindrical wall portion 38 has an inwardly facing annular groove 40 in which is positioned a flat, substantially rigid Teflon or other suitable plastic ring 41 having an opening sized to closely receive the male coupling member cylindrical wall surface 9. Also positioned in the groove 40 is an annular resilient sealing ring 42 having a size to sealingly engage such cylindrical wall surface 9 of the male member 10 adjacent the insertion end 12. As can be seen in Fig. 2, the groove 40 is axially positioned such that the sealing ring 42 is engaged by and seals such cylindrical wall surface 9 simultaneously with or prior to opening the passageways to the flow of fluid.

Formed as an integral part of the body 31 is an apertured web 43 having a centrally positioned aperture 44 lying on the axis A and a plurality of five flow passages 45 positioned around the central aperture 44 (See Fig. 1A).

The portion of the body 31 between the second inwardly facing cylindrical wall portion 38 and the apertured web 43 includes an outwardly tapering wall portion 46, a shoulder 47, an inwardly tapering wall portion 48 and a third inwardly facing cylindrical wall portion 49 extending to the apertured web 43. An inwardly facing threaded section 50 or other suitable attachment means for attaching to a fluid flow line is positioned between the apertured web 43 and the opposing end 33.

An axially moveable sleeve 52 is positioned in the passageway 34. The sleeve 52 has a substantially flat abutment end 53 sized to receive the insertion end 12 of the male coupling member 10 in surface-to-surface contact and an opposing spring engaging end 54. The sleeve 52 has an outwardly facing cylindrical wall portion 55 sized for sliding engagement with the second cylindrical wall portion 38 of the body 31. The cylindrical wall portion 55 has an outwardly facing annular groove 56 in which is positioned a resilient annular seal 57 which sealingly engages the second cylindrical wall portion 38 when the sleeve 52 is in the positioned shown in Figs. 1 and 2 and a Teflon backup ring 58 which serves to prevent blow-out of the annular seal 57 when subjected to high pressures. The sleeve 52 has a second outwardly facing annular groove positioned between the annular groove 56 and the spring engaging end 54 in which is positioned a metal retaining ring 60. The sleeve 52 is also provided with an outwardly facing inwardly tapering wall portion 61 between the groove for retaining ring 60 and the spring engaging end 54. The sleeve 52 has an inwardly facing groove in which is positioned an annular sealing ring 62. Adjacent the inwardly facing groove receiving the annular sealing ring 62 is a shoulder 69 defining a reduced size opening.

A compression spring 59 is positioned between the web 43 and end 54 of the sleeve 52 and functions to urge the sleeve 52 toward the receiving end 32 of the body 31.

An axially extending stem valve 64 is fixedly mounted in the apertured web 43. The stem valve 64 has a portion extending through the central aperture 44 and enlarged shoulders 65 on opposite sides of the apertured web 43 holding the stem valve 64 in a fixed position in the body 31. The opposing end of the stem valve 64 has an enlarged head 66 having an outwardly flaring wall with an outwardly facing surface 67 adjacent the end 68 sized to sealingly engage the annular sealing ring 62 of the sleeve 52. The size of the enlarged head 66 in the area adjacent the end 68 is greater than the size of the opening of the sleeve 52 at the shoulder 69 adjacent the annular sealing ring 62 and, therefore, provides a means for limiting axial movement of the sleeve 52 toward the receiving end 32 in response to urging of the spring 59; however, the primary means of limiting such axially forward movement of the sleeve 52 toward the receiving end 32 resides in the engagement of the retaining ring 60 against the tapering wall portion 46. Thus, the relative dimensions of (1) the stem valve 64 and its enlarged head 66 with respect to the sleeve 52 and its associated groove containing the retaining ring 60 and (2) the body 31 and its tapering wall 46 are such that the outwardly facing wall 67 of the enlarged head 66 will engage the annular sealing ring 62 with sufficient force, something on the order about 10 pounds, to obtain a fluid tight seal. When the sleeve 52 is axially positioned such that the annular sealing ring 62 has sealingly engaged the outwardly facing wall 67, the retaining ring 60 will engage the tapering wall portion 46 of the body 31 to actually prevent further movement of the sleeve 52 toward the receiving end 32 in response to urging of the spring 59. Thus, the retaining ring 60 serves to prevent excessive forces from being developed between the shoulder 69 and the enlarged head 66 of the stem valve 64.

The axial extent of movement of the sleeve 52 away from the receiving end 32 against the yielding action of the spring 59 is limited by engagement of the sleeve inwardly tapering wall portion 61 against the body inwardly tapering wall portion 48. Such engagement eliminates any possibility of the sleeve 52 being moved toward the opposing end 33 so far that the spring 59 bottoms out as such bottoming-out of a spring places undue fatigue on it and could result in premature failure.

The enlarged head 66 has a cavity 70 formed therein adjacent the end 68 having a size and shape to receive the nose 27 of the male coupling member 10 in close relationship while permitting the insertion end 12 of the male coupling member 10 to be in face-to-face contact with abutment end of the sleeve 52. Thus, as may be seen in particularly in Fig. 2, when the male coupling member 10 is inserted in the insertion end 32 of the female coupling member 20, its flat insertion end 12 will engage the flat abutment end 53 of the sleeve 52 and, at the same time, the nose 27 will substantially fill the cavity 70 of the enlarged head 66 of stem valve 64. It will be noted that when in this position, both the male coupling member 10 and the female coupling member 20 remain closed with the annular seal 28 of the male coupling member 10 continuing to be sealingly engaged to the tapering wall portion 17 of the body portion 11 and with the outwardly facing wall 67 of the stem valve enlarged head 66 sealingly engaging the annular sealing ring 62 of the sleeve 52. In this position, the cylindrical wall surface 9 of the male coupling member 10 between the insertion end 12 and the tapering portion 14A of abutment 14 is sealingly engaged to the annular sealing ring 42 of the female coupling member 20. Additionally, and importantly, there is very little space and, preferably, virtually no space at all between the engaged male coupling member 10 and female coupling member 20 for the inclusion of air.

Continued movement of the male coupling member 10 into the female coupling member 20 causes the insertion end 12 of the body portion 11 to urge against the abutment end 53 of the sleeve 52 against the yielding action of the compression spring 59. Since the stem valve 64 is maintained in a fixed position by virtue of its connection to the apertured wall 43, such axial displacement of the sleeve 52 opens the passageway between the annular sealing ring 62 and the enlarged head outwardly facing wall 67. Similarly, such continued movement of the male coupling member 10 causes the fixed stem valve 64 to effect retraction of the axial stem valve 29 of the male coupling member 10 against the yielding action of the compression spring 30, displacing the annular seal 28 of the enlarged head 26 out of engagement with the tapering wall portion 17 and thereby opening the joined male coupling member 10 and female coupling member 20 to the flow of fluid therethrough. It should be noted that the size of the enlarged head 66 of the stem valve 64 adjacent the end 68 is smaller than the opening of the male coupling member 10 through which the enlarged head 66 protrudes so that there is no interference with its movement into the male coupling member body portion 10 to retract the stem valve 29.

As is well known in the art, there is provided an annular collar 72 which is retracted against the forward urging action of compression spring 73 thereby permitting the detent balls 36 to move radially outwardly in order to permit insertion of the male coupling member 10 without interference therefrom. This is the position shown in Fig. 2. Following complete insertion of the male coupling member 10 to the position shown in Fig. 3, the collar 72 is permitted to move forwardly toward the insertion end in response to urging by the compression spring 73 to urge the detent balls 36 into the groove 15 thereby retaining the male coupling member 10 engaged to the female coupling member 20.

As will be readily appreciated from viewing Figs. 2 and 3, in releasing the male coupling member 10 from the female coupling member 20, both the stem valve 25 and the stem valve 64 will be closed to the flow of fluid prior to or simultaneously with disengagement of the seal 42 from the male coupling member cylindrical wall surface 9 adjacent the insertion end 12. This coupled with the fact that there is little or no space between the nose portion 27 and the enlarged head 67 and no space between the engaged flat insertion end 12 and flat abutment end 53, permits such disengagement with little or no spillage or escape of fluid.

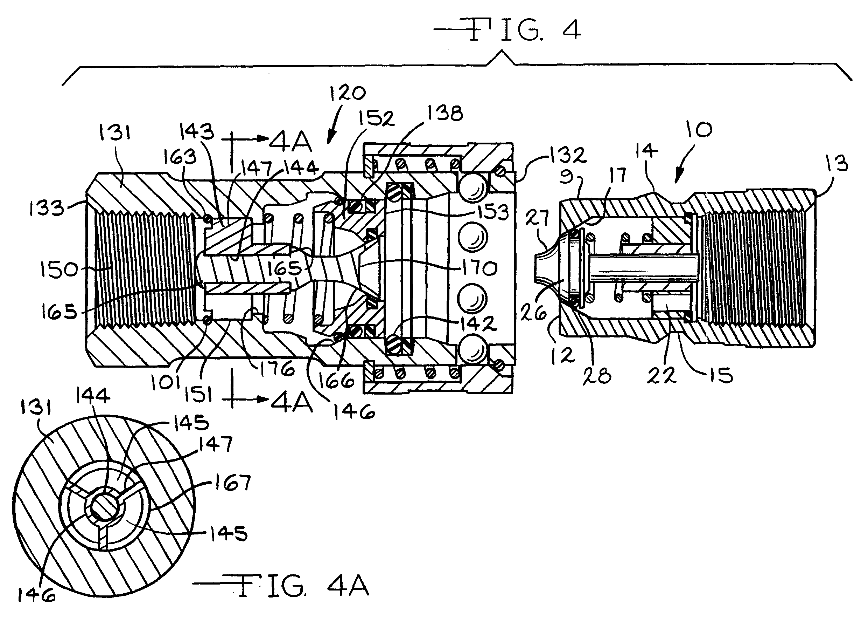

Referring now to the embodiment of Figs. 4-6, there is shown a female coupling member 120 having a body portion 131 which is virtually identical to the body portion 31 of the female coupling member 20 described in the embodiment of Figs. 1 through 3. The only significant different between the body portion 131 of the embodiment of Figs. 4 through 6 and the body of 31 of the embodiment of Figs. 1 through 3 is that the body 131 of the embodiment of Figs. 4 through 6 does not have an integrally formed apertured web such as the apertured web 43 of the embodiment of Figs. 1 through 3. The body portion 131 is provided with a separately formed web member or spider 143 which is positioned in a constricted area 151 of the body 131. An inwardly facing groove 163 between the constricted area 151 and the threaded section 150 receives a snap ring 101 positioned to engage and restrict movement of the spider 143 toward the opposing end 133. The body portion 131 is also provided with a radially inwardly extending shoulder 176 which is positioned to be engaged by and restrict axial movement of the spider 143 toward the receiving end 132.

The spider 143 has a centrally positioned aperture 144 defined by a hub 146 lying on the axis A and a plurality of three flow passageways 145 separated by wings 147 positioned around the hub 146 (See Fig. 4A).

An axially extending stem valve 164 is mounted in the centrally positioned aperture 144 of the spider 143 and has enlarged shoulders 165 on opposite sides of the spider 143 holding it in a fixed position on the spider 143 and in a fixed position in the body 131.

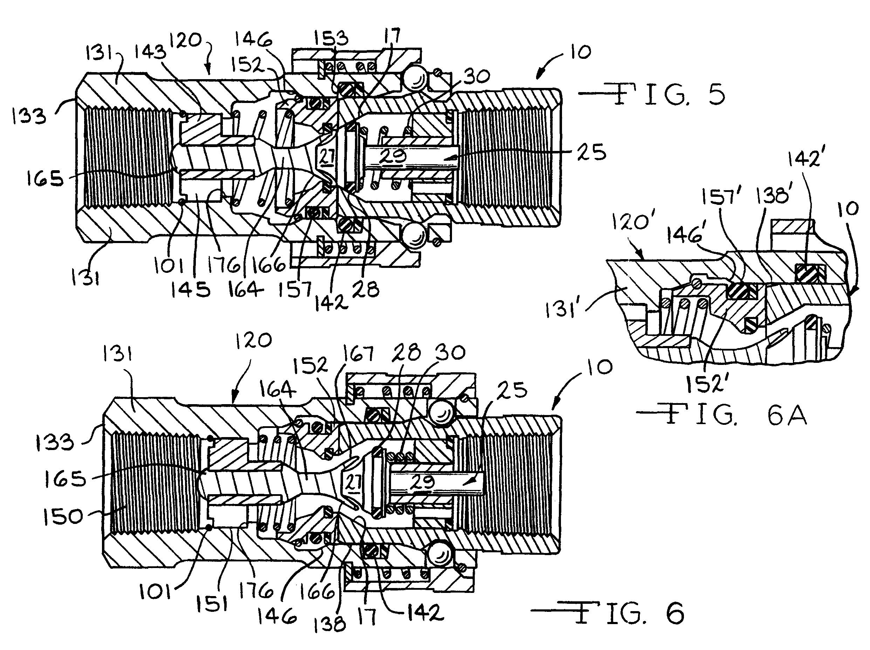

When the male coupling member 10 is inserted in the receiving end 132 of the female coupling member 120, the enlarged head 166 receives the nose 27 of the male coupling member 10 in the cavity 170 and the flat insertion end 12 engages the flat abutment end 153 of the sleeve 152 after the sealing ring 142 has become sealingly engaged to the cylindrical wall surface 9 adjacent such insertion end 12. As shown in Fig. 5, there is virtually no space for air to be entrapped as the male coupling member 10 and female coupling member 120 are moved to the partially connected position of Fig. 5 and thereafter to the fully engaged position of Fig. 6. As the male coupling member 10 completes its movement to the fully engaged position of Fig. 6, the sleeve 152 will be axially displaced out of engagement with the outwardly facing wall 167 of the fixed stem valve 164 and the axial stem valve 25 of the male coupling member 10 will be caused by the fixed stem valve 164 to retract against the yielding action of spring 30 to displace the annular seal 28 of stem valve 25 out of engagement with the tapering wall 17 thereby opening the joined male coupling member 10 and female coupling member 120 to the flow of fluid therethrough.

Referring now to Fig. 6A, there is shown a further embodiment of the body 131' of the female coupling member 120. In this embodiment, that section of the second inwardly facing cylindrical wall portion 138' between the sealing ring 142' and the outwardly tapering wall portion 146' has a greater axial extent than the corresponding section of the second inwardly facing cylindrical wall portion 138 of the embodiment of Figs. 6-8. As a result of such greater axial extent, the annular seal 157' of the sleeve 152' will remain in sealing engagement with the second inwardly facing cylindrical wall portion 138' when the male coupling member 10 is fully engaged to the female coupling member 120' as well as when it is disengaged therefrom.

Other modifications will be readily apparent to those skilled in the art. Accordingly, the scope of the present application should be determined only by the scope of the allowed claims.

## Claims

1. A female coupling member (20) for use with a male coupling member (10) which male coupling member has (1) a body portion(11) with an entrance end including an annular surface (12) defining an opening communicating with an axial passageway, an outwardly facing cylindrical wall portion (9) adjacent said entrance end and an outwardly extending abutment (14) spaced from said entrance end and (2) an axially extending stem valve (25) axially movable in said axial passageway between a closed position and an open position, said stem valve including a nose (27) which extends through said opening and outwardly from said annular surface when said stem valve is in said closed position, which female coupling member (20) comprises:
(a) a body (31) having a passageway extending along an axis from a receiving end (32) to an opposing end (33), said receiving end (1) sized to receive said male coupling member body portion and (2) defining an opening to said passageway, a first inwardly facing cylindrical wall section extending axially inwardly from said receiving end and sized to permit movement of said abutment (14) therethrough, a second inwardly facing cylindrical wall section (38) having a size to receive said male coupling member cylindrical wall portion in close relationship;
(b) a sleeve (52) having an engagement end (53) and an opposing end (54) positioned in said passageway for axial movement therein from a forward position in the vicinity of said receiving end to a retracted position closer to said opposing end;
(c) a stem valve (64) mounted on said body and extending through said sleeve and having an enlarged head sealingly engageable with said sleeve, said sleeve and said stem valve being relatively moveable between an engaged, closed position and an open position, said enlarged head (66) having a cavity sized to receive said nose when said male coupling member entrance end engages said sleeve engagement end; and
(d) a spring (59) yieldingly urging said sleeve toward said forward position.
characterized in that said female coupling member body has a tapered section (46) extending from said second inwardly facing cylindrical wall section outwardly in an axial direction toward said opposing end and
said sleeve (52) having an annular ring (60) engageable with said tapered section for limiting axial movement of said sleeve toward said receiving end, and
movement of said male coupling member into said female coupling member engaging said annular surface (12) against said sleeve engagement end (53) and said nose in said cavity and thereafter axially displacing said sleeve out of engagement with said stem valve.

2. A female coupling member according to claim 1, further including an annular seal (42)extending radially inwardly into said passageway in the vicinity of said receiving end sized to sealingly receive said male coupling member body portion.

3. A female coupling member according to claim 2, wherein an annular seal is positioned to sealingly engage said male coupling member body portion simultaneously with or prior to said annular surface (12) engaging said sleeve engagement end (53).

4. A female coupling member according to claim 1, wherein said stem valve (64) is fixedly mounted in said body.

5. A female coupling member according to claim 1, wherein said stem valve is mounted for axial movement in said body of an extent which is less than the extent of axial movement of said sleeve.

6. A female coupling member according to claim 1, wherein said body includes a wall (43) extending laterally of said axis between said sleeve and said opposing end and said stem valve is fixedly secured to said wall.

7. A female coupling member according to claim 1, wherein said body includes a wall extending laterally of said axis between said sleeve and said opposing end, said wall including an aperture, said stem valve slidingly received in said aperture for axial movement between a forward position and a retracted position closer to said opposing end and further including means yieldingly urging said stem valve toward said forward position.

8. A female coupling member according to claim 1, further including a sealing gasket (57) providing a seal between said sleeve and said body and further including a vent (45) in said body axially positioned between said sealing gasket and said sleeve opposing end.

9. A female coupling member according to claim 1, wherein said male coupling member (10) includes an outwardly facing cylindrical wall portion (11) extending away from said entrance end and a tapering wall portion (14A) extending outwardly at an acute angle to said axis to an abutment (14) and said female coupling member body (20) includes a first inwardly facing cylindrical wall section (37) extending axially inwardly from said receiving end and sized to permit movement of said abutment (14) therethrough, a second inwardly facing cylindrical wall section (38) having a size to receive said male coupling member cylindrical wall portion to close relationship and an inwardly tapering wall portion (39) joining said first and second inwardly facing cylindrical wall sections, said inwardly tapering wall portion positioned and disposed at an angle to receive said male coupling member tapering wall portion (14A) in substantially face-to-face relationship when said nose (27) is received in the cavity of said stem valve enlarged head (66).

10. A female coupling member according to claim 9, further including an annular sealing ring (42) extending inwardly from said second inwardly facing cylindrical wall section positioned axially to sealingly engage said male coupling member outwardly facing cylindrical wall portion prior to or simultaneously with the opening of said stem valve.

11. A female coupling member according to claim 9, wherein said body is provided with a reduced diameter cylindrical wall section between said second inwardly facing wall section and said opposing end and said sleeve is provided with (1) a sealing gasket in the vicinity of said engagement end engageable with said second inwardly facing cylindrical wall and (2) an outwardly facing cylindrical wall surface slideably received in said body reduced diameter cylindrical wall section, said body having a vent located in an axial position between said sealing gasket and said reduced diameter cylindrical wall section.

12. A female coupling member according to claim 1, wherein said sleeve (52) is a one-piece member.

13. A female coupling member according to claim 1, wherein said body (31) is a one-piece body.

14. A female coupling member according to claim 1, wherein said body includes a primary unit extending from said receiving end and a closure unit at said opposing end affixed to said primary unit, said closure unit including a wall extending laterally of said axis.

15. A female coupling member according to claim 14, wherein said stem valve (64) is fixedly secured to said wall.

16. A female coupling member according to claim 14, wherein said wall includes central aperture and said stem valve is slidingly received in said aperture.

17. A female coupling member according to claim 1, wherein said female coupling member body further includes an inwardly tapering wall portion extending in an axial direction toward said opposing end positioned between said tapered section and said opposing end and said sleeve is provided with an abutting surface engageable with said body inwardly tapering wall portion.

## Patentansprüche

1. Buchsenartiges Kupplungsteil (20) zur Verwendung mit einem steckerartigen Kupplungsteil (10), wobei das steckerartige Kupplungsteil aufweist:
(1) ein Gehäuseteil (11) mit einem einsteckseitigen Ende, das eine Ringfläche (12) aufweist, die eine mit einem axialen Durchgangskanal in Verbindung stehende Öffnung begrenzt, mit einem nach außen weisenden zylindrischen Wandteil (9) anschließend an das einsteckseitige Ende und mit einem nach außen ragenden Widerlager (14), das von dem einsteckseitigen Ende beabstandet ist und
(2) einen axial verlaufenden Ventilstößel (25), der in dem axialen Durchgangskanal zwischen einer Schließstellung und einer geöffneten Stellung axial beweglich ist, wobei der Ventilstößel eine Nase (27) aufweist, die bei in der Schließstellung stehendem Ventilstößel durch die Öffnung und von der Ringfläche aus nach außen ragt, wobei das buchsenartige Kupplungsteil (20) aufweist:
(a) ein Gehäuse (31) mit einer längs einer Achse von einem aufnahmeseitigen Ende (32) zu einem gegenüberliegenden Ende (33) verlaufenden Durchgangskanal, wobei das aufnahmeseitige Ende (1) so bemessen ist, dass es den entsprechenden Gehäuseteil des steckerartigen Kupplungsteils aufnehmen kann (2) und eine in den Durchgangskanal führende Öffnung begrenzt,
mit einem nach innen weisenden ersten zylindrischen Wandabschnitt, der sich von dem aufnahmeseitigen Ende aus axial erstreckt und so bemessen ist, dass er das Durchschieben des Widerlagers (14) erlaubt, und mit einem nach innen weisenden zweiten zylindrischen Wandabschnitt (38), der so bemessen ist, dass er den zylindrischen Wandteil des buchsenartigen Kupplungsteils in eng tolerierter Zuordnung aufnehmen kann;
(b) eine ein Anlageende (53) und ein diesem gegenüberliegendes Ende (54) aufweisende Hülse (52), die in dem Durchgangskanal zwischen einer vorderen Stellung in der Nähe des aufnahemseitigen Endes und einer nach hinten verschoben Stellung näher bei dem gegenüberliegenden Ende axial beweglich ist;
(c) einen an dem Gehäuse gelagerten Ventilstößel (64), der durch die Hülse verläuft und einen mit der Hülse abdichtend zusammenwirkenden verbreiterten Kopf aufweist, wobei die Hülse und der Ventilstößel zwischen einer geschlossenen Eingriffsstellung und einer geöffneten Stellung realtiv zueinander bewegbar sind und der verbreiterte Kopf (66) eine Vertiefung aufweist, die so bemessen ist, dass sie bei mit dem anlageseitigen Ende der Hülse in Eingriff stehendem einsteckseitigem Ende des steckerartigen Kupplungsteils die Nase aufnimmt; und
(d) eine Feder (59), die die Hülse nachgiebig auf die vordere Stellung zu drückt,
**dadurch gekennzeichnet, dass**
das Gehäuse des buchsenartigen Kupplungsteils einen konischen Abschnitt (46) aufweist, der sich von dem nach innen weisenden zweiten zylindrischen Wandabschnitt aus nach außen in axialer Richtung zu dem gegenüberliegenden Ende hin erstreckt und dass
die Hülse (52) einen geschlossenen Ring (60) trägt, der mit dem konischen Abschnitt zur Begrenzung der Axialbewegung der Hülse zu dem aufnahmeseitigen Ende hin in Eingriff bringbar ist und dass
beim Einfügen des steckerartigen Kupplungsteils in das buchsenartige Kupplungsteil die Ringfläche (12) an dem anlageseitigen Hülsenende (53) zur Anlage kommt und die Nase in der Vertiefung aufgenommen wird und anschließend die Hülse axial außer Eingriff mit dem Ventilstößel gebracht wird.

2. Buchsenartiges Kupplungsteil nach Anspruch 1, das einen Dichtungsring (42) aufweist, der in der Nähe des aufnahmeseitigen Endes radial nach innen in den Durchgangskanal ragt und so bemessen ist, dass er den entsprechenden Gehäuseteil des steckerartigen Kupplungsteils abgedichtet aufnehmen kann.

3. Buchsenartiges Kupplungsteil nach Anspruch 2, bei dem ein Dichtungsring so angeordnet ist, dass er gleichzeitig mit oder vor der Anlage der Ringfläche (12) an dem anlageseitigen Hülsenende (53) abdichtend mit dem entsprechenden Gehäuseteil des steckerartigen Kulungsteils in Eingriff kommt.

4. Buchsenartiges Kupplungsteil nach Anspruch 1, bei dem der Ventilstößel (64) in dem Gehäuse lagefest gelagert ist.

5. Buchsenartiges Kupplungsteil nach Anspruch 1, bei dem der Ventilstößel in dem Gehäuse um einen Betrag axial beweglich gelagert ist, der kleiner ist als der axiale Bewegungshub der Hülse.

6. Buchsenartiges Kupplungsteil nach Anspruch 1, bei dem das Gehäuse eine Wand (43) aufweist, die sich seitlich der Achse zwischen der Hülse und dem gegenüberliegenden Ende erstreckt und dass der Ventilstößel an dieser Wand lagefest befestigt ist.

7. Buchsenartiges Kupplungsteil nach Anspruch 1, bei dem das Gehäuse eine sich seitlich der Achse zwischen der Hülse und dem gegenüberliegenden Ende erstreckende Wand aufweist, wobei diese Wand eine Öffnung enthält und der ventilstößel in dieser Öffnung zwischen einer vorderen Stellung und einer näher dem gegenüberliegenden Ende liegenden zurückbewegten Stellung axial bewegbar ist und bei dem außerdem Mittel vorgesehen sind, um den Ventilstößel nachgiebig auf die vordere Stellung zu zu drücken.

8. Buchsenartiges Kupplungsteil nach Anspruch 1, bei dem eine eine Abdichtung zwischen der Hülse und dem Gehäuse bewirkende Dichtung (57) vorgesehen ist und das außerdem in dem Gehäuse eine Druckausgleichsöffnung (45) aufweist, die axial zwischen der Dichtung und dem gegenüberliegenden Hülsenende angeordnet ist.

9. Buchsenartiges Kupplungsteil nach Anspruch 1, bei dem das steckerartige Kupplungsteil (10) einen nach außen weisenden zylindrischen Wandabschnitt (11), der sich von dem einsteckseitigen Ende weg erstreckt und einen konischen Wandabschnitt (14A) aufweist, der sich unter einem spitzen Winkel mit der Achse zu einem Widerlager (14) hin erstreckt und bei dem das Gehäuse (20) des buchsenartigen Kupplungsteils einen nach innen weisenden ersten zylindrischen Wandabschnitt (37), der von dem aufnahmeseitigen Ende aus axial nach innen verläuft und so bemessen ist, dass er das Durchschieben des Widerlagers (14) gestattet, einen nach innen weisenden zweiten zylindrischen Wandabschnitt (38), dessen Große so bemessen ist, dass er den entsprechenden zylindrischen Wandabschnitt des steckerartigen Kupplungselementes in eng tolerierter Zuordnung aufnehmen kann und einen nach innen zu gerichteten konischen Wandabschnitt (39) aufweist, der sich an den ersten und den zweiten nach innen weisenden zylindrischen Wandabschnitt anschließt, wobei der nach innen weisende konische Wandabschnitt so positioniert und unter einem solchen Winkel angeordnet ist, dass er den konischen Wandabschnitt (14A) des steckerartigen Kupplungsteils in einer im Wesentlichen aneinander anliegenden Zuordnung aufnehmen kann, wenn die Nase in der Vertiefung des verbreiterten Ventilstößelkopfes (66) liegt.

10. Buchsenartiges Kupplungsteil nach Anspruch 9, das einen von dem nach innen weisenden zweiten zylindrischen Wandabschnitt nach innen vorragenden Dichtungsring (42) aufweist, der axial so positioniert ist, dass er mit dem nach außen weisenden zylindrischen Wandabschnitt des steckerartigen Kupplungsteils zeitlich vor oder gleichzeitig mit dem Öffnen des Ventilstößels abdichtend in Eingriff kommt.

11. Buchsenartiges Kupplungsteil nach Anspruch 9, bei dem das Gehäuse mit einem zwischen dem zweiten nach innen weisenden Wandabschnitt und dem gegenüberliegenden Ende liegenden Wandabschnitt kleineren Durchmessers ausgebildet ist und die Hülse versehen ist mit
(1) einer Dichtung in der Nähe des anlageseitigen Endes die mit dem zweiten nach innen weisenden zylindrischen Wandabschnitt in Eingriff bringbar ist und
(2) einer nach außen weisenden zylindrischen Wandfläche, die in dem Gehäusewandabschnitt kleineren Durchmessers verschieblich aufgenommen ist, wobei das Gehäuse eine Druckausgleichsöffnung aufweist, die in einer axialen Position zwischen der Dichtung und dem zylindrischen Wandabschnitt kleineren Durchmessers angeordnet ist.

12. Buchsenartiges Kupplungsteil nach Anspruch 1, bei dem die Hülse (52) als einstückiges Teil ausgebildet ist.

13. Buchsenartiges Kupplungsteil nach Anspruch 1, bei dem das Gehäuse (31) als einstückiges Teil ausgebildet ist.

14. Buchsenartiges Kupplungsteil nach Anspruch 1, bei dem das Gehäuse eine von dem aufnahmeseitigen Ende aus sich erstreckende Grundeinheit und eine an dem gegenüberliegenden Ende an dieser Grundeinheit befestigte Absperreinheit aufweist, wobei die Absperreinheit eine seitlich der Achse sich erstreckende Wand aufweist.

15. Buchsenartiges Kupplungsteil nach Anspruch 14, bei der der Ventilstößel (64) an der Wand lagefest befestigt ist.

16. Buchsenartiges Kupplungsteil nach Anspruch 14, bei dem die Wand eine zentrische Öffnung aufweist und der ventilstößel in dieser Öffnung verschieblich aufgenommen ist.

17. Buchsenartiges Kupplungsteil nach Anspruch 1, bei dem das Gehäuse des buchsenartigen Kupplungsteils außerdem einen nach innen zu sich verj|ngenden Wandabschnitt aufweist, der sich in Axialrichtung zu dem gegenüberliegenden Ende hin erstreckt, zwischen dem konischen Abschnitt und dem gegenüberliegenden Ende liegt und wobei die Hülse mit einer Anlagefläche versehen ist, die an dem nach innen zu sich verjüngenden Gehäusewandabschnitt zur Anlage bringbar ist.

## Revendications

1. Un coupleur femelle (20) pour utilisation avec un coupleur mâle (10) lequel coupleur mâle présente (i) un corps (11) avec une extrémité d'insertion comprenant une surface annulaire (12) définissant une ouverture communiquant avec un passage axial, une portion de paroi cylindrique (9) orientée vers l'extérieur, adjacente à ladite extrémité d'insertion et un épaulement saillant (14), espacée de ladite extrémité d'insertion, et (ii) une valve à tige (25) se déplaçant dans une direction axiale dans ledit passage entre une position fermée et une position ouverte, ladite valve à tige comprenant un nez (27) qui se prolonge à travers ladite ouverture et à l'extérieur de ladite surface annulaire lorsque ladite valve à tige se trouve dans ladite position fermée, ledit coupleur femelle (20) comprenant :
a) un corps (31) avec un passage le long d'un axe s'étendant d'une extrémité réceptrice (32) vers l'extrémité opposée (33) ladite extrémité réceptrice (i) étant dimensionnée pour recevoir ledit corps du coupleur mâle et (ii) définissant une ouverture vers ledit passage, une première section de paroi cylindrique orientée vers l'intérieur se prolongeant dans une direction axiale vers l'intérieur à partir de ladite extrémité réceptrice et dimensionnée pour permettre le mouvement en insertion dudit épaulement (14), une seconde section de paroi cylindrique (38) orientée vers l'intérieur, dimensionnée pour recevoir ladite portion de paroi cylindrique du coupleur mâle étroitement ;
b) un manchon (52) avec une extrémité d'insertion (53) et une extrémité opposée (54) positionné dans ledit passage pour effectuer un mouvement axial à partir d'une position vers l'avant dans le voisinage de ladite extrémité réceptrice vers une position rétractée plus proche de ladite extrémité opposée ;
c) une valve à tige (64) montée sur ledit corps et se prolongeant à travers ledit manchon et ayant une tête élargie pouvant s'engager de façon étanche dans ledit manchon, ledit manchon et ladite valve à tige pouvant se déplacer relativement entre une position engagée et fermée et une position ouverte, ladite tête élargie (66) étant munie d'une cavité dimensionnée pour recevoir ledit nez lorsque ladite extrémité d'insertion du coupleur mâle s'engage dans ladite extrémité réceptrice du manchon ; et
d) un ressort (59) poussant doucement ledit manchon vers ladite position avant,
caractérisé en ce que ledit corps du coupleur femelle dispose d'une section conique (46) se prolongeant vers l'extérieur à partir de ladite seconde section de paroi cylindrique orientée vers l'intérieur, dans un sens axial, vers ladite extrémité opposée, et
ledit manchon (52) ayant une bague annulaire (60) pouvant s'engager dans ladite section conique pour limiter le mouvement axial dudit manchon vers ladite extrémité réceptrice, et
le mouvement du dit coupleur mâle dans ledit coupleur femelle engageant ladite surface annulaire (12) contre ladite extrémité d'insertion (53) du manchon et ledit nez dans ladite cavité, et déplaçant ensuite dans un sens axial ledit manchon hors de l'engagement avec ladite valve à tige.

2. Un coupleur femelle selon la revendication 1, incluant de plus un joint étanche annulaire (42) se prolongeant dans un sens radial vers l'intérieur dudit passage au voisinage de ladite extrémité réceptrice, dimensionné pour recevoir de façon étanche ledit corps du coupleur mâle.

3. Un coupleur femelle selon la revendication 2, dans lequel un joint étanche annulaire est positionné pour recevoir de façon étanche ledit corps du coupleur mâle, simultanément ou avant que ladite surface annulaire (12) engage ladite extrémité d'insertion (53) du manchon.

4. Un coupleur femelle, selon la revendication 1, dans lequel ladite valve à tige (64) est montée de façon fixe dans ledit corps.

5. Un coupleur femelle selon'la revendication 1, dans lequel ladite valve à tige est montée pour effectuer un mouvement axial dans ledit corps d'une longueur inférieure à celle du mouvement axial dudit manchon.

6. Un coupleur femelle selon la revendication 1, dans lequel ledit corps comprend une paroi (43) prolongeant latéralement ledit axe entre ledit manchon et ladite extrémité opposée, ladite valve à tige étant fixée sur ladite paroi.

7. Un coupleur femelle selon la revendication 1, dans lequel ledit corps inclut une paroi prolongeant latéralement ledit axe entre ledit manchon et ladite extrémité opposée, ladite paroi comprenant une ouverture, ladite valve à tige étant glissée dans ladite ouverture pour effectuer un mouvement axial entre une position vers l'avant et une position rétractée plus proche de ladite extrémité opposée, et incluant de plus des moyens permettant de pousser doucement ladite valve à tige vers la position avant.

8. Un coupleur femelle selon la revendication 1 incluant de plus un joint d'étanchéité (57) assurant l'étanchéité entre ledit manchon et ledit corps avec en plus un évent (45) dans ledit corps, positionné dans un sens axial entre ledit joint étanche et ladite extrémité opposée du manchon.

9. Un coupleur femelle selon la revendication 1, dans lequel ledit coupleur mâle (10) inclut une paroi cylindrique orientée vers l'extérieur (11) s'étendant à partir de ladite extrémité d'insertion et une paroi conique (14A) s'étendant vers l'extérieur formant un angle aigu avec ledit axe vers un épaulement (14), et ledit corps du coupleur femelle (20) comprenant une première section de paroi cylindrique orientée vers l'intérieur (37) s'étendant dans une direction axiale vers l'intérieur à partir de ladite extrémité réceptrice et dimensionnée pour permettre le mouvement dudit épaulement (14) en insertion, la seconde section de paroi cylindrique orientée vers l'intérieur (38), dimensionnée pour recevoir ladite partie de paroi cylindrique du coupleur mâle étroitement, et, une partie de la paroi conique orientée vers l'intérieur (39) joignant les dites première et seconde sections de paroi cylindrique orientées vers l'intérieur, ladite portion de paroi conique orientée vers l'intérieur étant positionnée et disposée à un certain angle pour recevoir ladite portion (14A) de paroi conique du coupleur mâle dans une relation substantiellement face à face lorsque ledit nez (27) est reçu dans la cavité de la tête élargie (66) de ladite valve à tige.

10. Un coupleur femelle selon la revendication 9, incluant en plus une bague annulaire d'étanchéité (42) s'étendant vers l'intérieur à partir de ladite deuxième section de paroi cylindrique orientée vers l'intérieur et positionnée dans un sens axial pour engager de façon étanche la portion de paroi cylindrique orientée vers l'extérieur dudit coupleur mâle avant ou simultanément avec l'ouverture de ladite valve à tige.

11. Un coupleur femelle selon la revendication 9, dans lequel ledit corps est muni d'une section de paroi cylindrique à diamètre réduit, entre ladite seconde section orientée vers l'intérieur et ladite extrémité opposée, et ledit manchon étant muni de (i) un joint étanche dans le voisinage de ladite extrémité d'insertion pouvant être engagé avec ladite seconde paroi cylindrique orientée vers l'intérieur et (ii) une surface de paroi cylindrique orientée vers l'extérieur glissée dans ladite section de paroi cylindrique à diamètre réduit du corps, ledit corps ayant un évent placé en position axiale entre ledit joint d'étanchéité et ladite section de paroi cylindrique à diamètre réduit.

12. Un coupleur femelle selon la revendication 1 dans lequel ledit manchon (52) est composé d'une seule pièce.

13. Un coupleur femelle selon la revendication 1 dans lequel ledit corps (31) est constitué d'une seule pièce.

14. Un coupleur femelle selon la revendication 1, dans lequel ledit corps inclut une unité primaire se prolongeant à partir de ladite extrémité réceptrice et une unité de fermeture à ladite extrémité opposée fixée sur ladite unité primaire, ladite unité de fermeture incluant une paroi s'étendant latéralement au dit axe.

15. Un coupleur femelle selon la revendication 14, dans lequel ladite valve à tige (64) est solidement fixée dans ladite paroi.

16. Un coupleur femelle selon la revendication 14, dans lequel ladite paroi comporte une ouverture centrale dans laquelle ladite valve à tige est glissée.

17. Un coupleur femelle selon la revendication 1 dans lequel ledit corps du coupleur femelle comprend de plus une portion de paroi conique orientée vers l'intérieur et se prolongeant dans un sens axial vers ladite extrémité opposée positionnée entre ladite section conique et ladite extrémité opposée, et ledit manchon étant muni d'une surface butoir qui peut s'engager dans ledit corps à l'intérieur de la portion de la paroi conique orientée vers l'intérieur.
